# EUROPEAN PATENT APPLICATION

(11) **EP 4 539 225 A1**
(43) Date of publication of application: **16.04.2025**
(21) Application number: 24203859.4
(22) Date of filing: 01.10.2024
(51) Int. Cl.: H01M 50/213, H01M 50/244, H01M 50/569, H01M 50/291, H01M 50/298

(54) **BATTERY CELL BRACKET, BATTERY MODULE AND BATTERY**

(30) Priority: 11.10.2023 CN 202311317155; 11.10.2023 CN 202322733937 U; 11.10.2023 CN 202322733943 U; 11.10.2023 CN 202322733953 U; 11.10.2023 CN 202322733988 U; 27.05.2024 WO PCT/CN2024/095490
(71) Applicant: Eve Energy Co., Ltd., Huizhou, Guangdong 516006 (CN)
(72) Inventor: CHEN, Zhenjie, Huizhou, Guangdong, 516006 (CN)
(74) Representative: Murgitroyd & Company

(57) **Abstract**

Provided herein are a battery cell bracket, a battery module and a battery. The battery cell bracket includes a bracket body, and the bracket body has an accommodation cavity for installing the battery cell; a wiring groove is provided on an outer surface of the bracket body along one end of the battery cell in an axial direction, and a communication hole is provided at a bottom of the wiring groove to communicate with the accommodation cavity.

## Description

### BACKGROUND OF DISCLOSURE

### 1. Field of the Disclosure

The present disclosure relates to the field of battery technology, and specifically to a battery cell bracket, a battery module and a battery.

### 2. Description of the Related Art

In the related art, a battery module includes a bracket body, a battery cell installed on the bracket body, a bus structure that connects the battery cells in series, and a wiring harness electrically connected to the battery cell for collecting a voltage signal of the battery cells.

### SUMMARY

Since the wire harness is laid directly on a surface of the bracket body, the wire harness will be arched randomly and the laying neatness is poor, which is not conducive to the smooth progress of subsequent glue filling operations.

In a first aspect of the present disclosure, a battery cell bracket is provided, which includes a bracket body having an accommodation cavity configured to install the battery cell; a wiring groove is provided on an outer surface of the bracket body along an end of an axial direction of the battery cell, and a communication hole is provided at a bottom of the wiring groove to communicate with the accommodation cavity.

In a second aspect of the present disclosure, a battery module is provided, which includes a battery cell and the aforementioned battery cell bracket; the battery cell is provided in the accommodation cavity, and an electrode of the battery cell is located in the communication hole.

In a third aspect of the present disclosure, a battery is also provided, including a conductive component, a fastening component and the aforementioned battery module. The conductive component is disposed on the outer surface of the bracket body and is electrically connected to the battery cell; the fastening component is provided on the bracket body and is configured to fasten the conductive component to the bracket body.

The beneficial effects of the present disclosure are as follows: by providing the wiring groove, the present disclosure arranges the wire harness for collecting the voltage information of the battery cell in the wiring groove, thereby functioning to constrain the wire harness via the groove wall of the wiring groove, and in turn preventing the wire harness from being arched randomly, which makes the wire harness neatly arranged and conducive to the smooth process of the subsequent glue filling operations.

### BRIEF DESCRIPTION OF DRAWINGS

In order to more clearly illustrate the embodiments of the present disclosure or related art, the following FIGS. will be described in the embodiments are briefly introduced. It is obvious that the drawings are merely some embodiments of the present disclosure, and a person having ordinary skill in the field can obtain other FIGS. according to these FIGS. without paying the premise.
FIG. 1 is a partial structural schematic diagram of a battery cell bracket provided by an embodiment of the present disclosure;
FIG. 2 is an enlarged partial view of FIG. 1;
FIG. 3 is a schematic structural diagram of a battery module provided by an embodiment of the present disclosure;
FIG. 4 is a schematic structural diagram of a chute provided by an embodiment of the present disclosure;
FIG. 5 is an enlarged view of A in FIG. 4;
FIG. 6 is a schematic diagram showing fitting between a nut and the chute provided by the embodiment of the present disclosure;
FIG. 7 is a top view of fitting between the conductive component and the fastening component provided by the embodiment of the present disclosure;
FIG. 8 is a cross-sectional view along B-B in FIG. 7;
FIG. 9 is an enlarged view of C in FIG. 8;
FIG. 10 is a top view of FIG. 1;
FIG. 11 is a cross-sectional view along D-D in FIG. 10;
FIG. 12 is a partial structural schematic diagram of the battery cell bracket provided by an embodiment of the present disclosure;
FIG. 13 is a front view of a mounting bracket provided by an embodiment of the present disclosure;
FIG. 14 is a top view of part of the battery cell bracket provided by the embodiment of the present disclosure;
FIG. 15 is a cross-sectional view along F-F in FIG. 14;
FIG. 16 is an enlarged view of G in FIG. 15;
FIG. 17 is a schematic diagram of a position of the communication groove provided by the embodiment of the present application;
FIG. 18 is a schematic diagram of partial glue filling positions during glue filling of the battery cell bracket provided by an embodiment of the present disclosure;
FIG. 19 is a schematic structural diagram of a bus structure provided by an embodiment of the present disclosure;
FIG. 20 is a schematic structural diagram of another bus structure provided by an embodiment of the present disclosure;
FIG. 21 is a top view of FIG. 3;
FIG. 22 is a cross-sectional view along H-H in FIG. 21;
FIG. 23 is a cross-sectional view along I-I in FIG. 21;
FIG. 24 is a partial enlarged view of FIG. 3;
FIG. 25 is an enlarged view of E in FIG. 1.

### Explanation of reference symbols:

10-Battery cell bracket; 101-First surface; 102-Chute; 1021-First section; 1022-Second section; 1023-First groove port; 103-Deformation groove; 104-Mounting table; 105-The first clamping structure; 107-Abdicating groove; 108-Accommodation cavity; 1081-First annular groove; 109-First mounting portion; 1 10-First through hole; 111-First plugging structure; 112-Plugging hole; 113-First bracket; 1131-Limiting block; 11311-Wedge block; 11312-Connection block; 1132-Communicaiton slot; 1133-Second mounting slot; 1134-Glue filling slot; 1135-Second through hole; 114-Second bracket; 1141-Mounting through hole; 1142-Glue filling hole; 1143-First baffle; 11431-First clamping slot; 1144-Second baffle; 11441-Second clamping slot; 1145-Third baffle; 11451-Wire slot, 1146-Fourth baffle, 11461-The first through groove; 1147-Thread hanging hook; 115-Positive communication hole; 116-Negative communication hole; 117-Wiring groove; 20-Battery cell; 30-Wire harness; 301-Bridging bar; 302-Bus bar; 3021-First opening; 303-Connection bar; 3031-Main part; 3032-Connection part; 3033-Bending part; 3034-Avoidance through hole; 3035-Fuse structure; 40-Bolt; 50-But; 501-Clamping hole; 502-Second clamping structure; 60-Temperature sensor; 601-First signal line; 70-Mounting bracket; 701-Collection end mounting slot; 702-Wiring harness mounting slot; 703-Threading hole; 704-Plugging shaft; 80 -Block cover; 801-Second plugging structure; 802-Reserved slot; 803-Groove body; 90-Glue; 901-First adsorption member; 902-Second adsorption member.

### DETAILED DESCRIPTION OF EMBODIMENTS

Embodiments of the present disclosure are described in detail with the technical matters, structural features, achieved objects, and effects with reference to the accompanying drawings as follows. Specifically, the terminologies in the embodiments of the present disclosure are merely for describing the purpose of the certain embodiment, without limiting the disclosure.

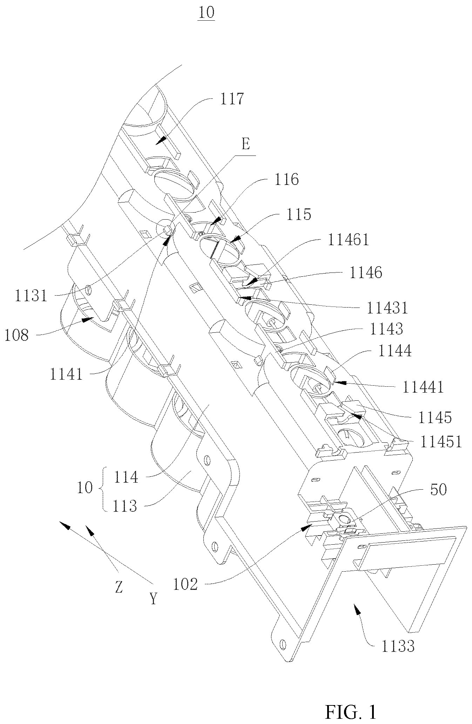

Please refer to FIG. 1, which is a partial structural schematic diagram of the battery cell support 10 provided by an embodiment of the present disclosure. Embodiments of the present disclosure provide a battery cell bracket 10, which includes a bracket body. The bracket body has an accommodation cavity 108 configured to install the battery cell. A wiring groove 117 is provided on the outer surface of the bracket body along an end of the axial direction of the battery cell 20, and a communication hole is provided at the bottom of the wiring groove 117 to communicate with the accommodation cavity 108. It can be understood that the communication hole is disposed opposite to the electrodes of the battery cell 20. Specifically, the communication hole includes a positive electrode communication hole 115 opposite to the positive electrode of the battery cell 20 and a negative electrode communication hole 116 opposite to the negative electrode of the battery cell 20. The bracket body is a plastic member, which is molded by injection molding. The accommodating cavity 108 is a cavity adapted to the battery cell 20. For example, when the battery cell 20 is a cylindrical battery cell, the accommodating cavity 108 is a cylindrical cavity. When there is a plurality of accommodation cavities 108, they are arranged along the extension direction Z of the wiring groove 117.

In the present embodiment, the wiring groove 117 is provided so that the wire harness for collecting voltage information of the battery cell is arranged in the wiring groove 117, thereby functioning to constrain the wire harness via the groove walls of the wiring groove 117, and in turn preventing the wire harness from being arched arbitrarily, which makes the wiring harness arranged neatly and conducive to the smooth progress of subsequent glue filling operations. When filling the glue, the glue is filled into the wiring groove 117, and the flow of glue is guided and restricted via the wiring groove 117, so that the glue only flows along the groove wall of the wiring groove 117, thereby preventing the glue from flowing randomly to contaminate the bracket body, while controlling the application amount of the glue to reduce a cost of auxiliary materials.

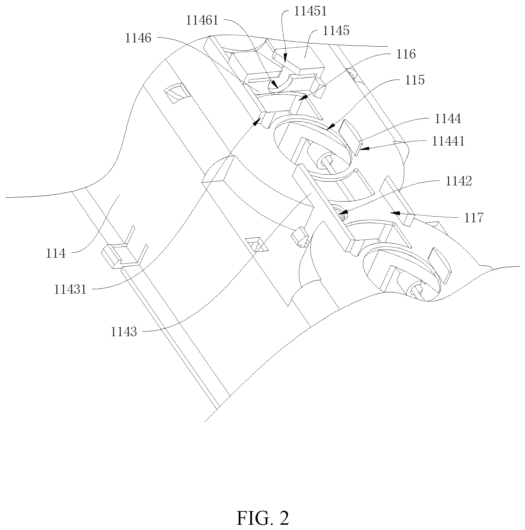

Please refer to FIG. 2, which is an enlarged partial view of FIG. 1. In one embodiment, a third baffle 1145 is provided on the side of the opening of the wiring groove 117 away from the bracket body. Along the width direction of the wiring groove 117, both ends of the third baffle 1145 are connected to the bracket body. It can be understood that the wire harness for collecting the voltage information of the battery cell is penetrated between the third baffle 1145 and the groove bottom of the wiring groove 117.

Exemplarily, the third baffle 1145 and the battery cell bracket 10 may be integrally injection molded. There is a plurality of the third baffles 1145, and they are spaced apart along the extension direction Z of the wiring groove 117.

In the present embodiment, by disposing the third baffle 1145, the wire harness located in the wiring groove 117 is made not only constrained by the groove bottom and the groove walls at both sides of the wiring groove 117, but also restricted by the third baffle 1145. As such, the wire harness 30 can be prevented from being arbitrarily arched from the opening of the wiring groove 117, thereby further improving the neatness of the layout of the wire harness 30, and facilitating the smooth progress of the subsequent glue filling operations.

Please refer to FIG. 2. In one embodiment, a wire slot 11451 is provided on the side of the third baffle 1145 away from the bracket body. Along the width direction of the wiring groove 117, the wire slot 11451 is configured to divide the third baffle 1145 into two independent portions.

In the present embodiment, the third baffle 1145 is divided into two independent parts by the wire slot 11451, so that the wire harness can directly pass through the wire slot 11451 and then move into the wiring groove 117 or exit from the wiring groove 117. There is no need to pass the wire harness through the end of the wiring groove 117, thereby improving the convenience of wiring and subsequent maintenance.

Referring to FIG. 2, in one embodiment, the extension direction Z of the wiring groove 117 intersects the extension direction Y of the wire slot 11451 in the orthographic projection of the bottom of the wiring groove 117.

It can be understood that the axis line of the wire harness located in the wiring groove 117 is parallel to the extension direction Z of the wiring groove 117 and is staggered with the axis line of the wire slot 11451, that is, the axis line of the wire harness in the wiring groove 117 is connected with the axis of the wire slot 11451 at an angle.

In the present embodiment, by arranging the wire slot 11451 as described above, the wire harness laid in the wiring groove 117 is less likely to protrude from the wire slot 11451, thereby improving the positional stability of the wire harness.

Please refer to FIG. 2. In one embodiment, a fourth baffle 1146 is provided in the wiring groove 117, and the fourth baffle 1146 is perpendicular to the extension direction Z of the wiring groove 117. A first through slot 11461 is provided on a side of the fourth baffle 1146 close to the third baffle 1145. The extending direction of the first through slot 11461 is parallel to the extending direction Z of the wiring groove 117.

It can be understood that when laying the wire harness, the wire harness is located in the first through slot 11461.

Exemplarily, the first through slot 11461 is a semicircular slot body, and the fourth baffle 1146 is integrally formed with the battery cell bracket.

In the present embodiment, by providing the first through slot 11461, the circumference of the wire harness is limited by the first through slot 11461 and the third baffle 1145, thereby further improving the positional stability of the wire harness and in turn improving the laying uniformity of the wire harness.

Please refer to FIGS. 1 and 2. In one embodiment, a first baffle 1143 and a second baffle 1144 are protruded from the outer surface of the bracket body. The first baffle 1143 and the second baffle 1144 are arranged at interval along the width direction of wiring groove 117, and the gap between the first baffle 1143 and the second baffle 1144 is the wiring groove 117.

It can be understood that the surfaces opposite to each other between the first baffle 1143 and the second baffle 1144 are the two side groove walls of the wiring groove 117, and the portion of the bracket body between the first baffle 1143 and the second baffle 1144 is the groove bottom of the wiring groove 117. The side between the first baffle 1143 and the second baffle 1144 away from the bracket body is the opening of the wiring groove 117.

In the present embodiment, the wiring groove 117 is defined by providing the first baffle 1143 and the second baffle 1144 so that the wiring groove 117 is located outside the bracket body, thereby making the wiring space more open and wiring more convenient.

Please refer to FIGS. 1 and 2. In one embodiment, the first baffle 1143 is provided with a first clamping slot 11431, and the second baffle 1144 is provided with a second clamping slot 11441.

It can be understood that the first clamping slot 11431 is used to arrange the connection bar electrically connected to the positive pole of the battery cell 20, and the second clamping slot 11441 is used to arrange the connection bar electrically connected to the negative pole of the battery cell 20. When filling the glue, the glue is filled into the wiring groove 117. The glue flows in the wiring groove 117 and connects the cell bracket 10, the connection bar and the wiring harness as a whole.

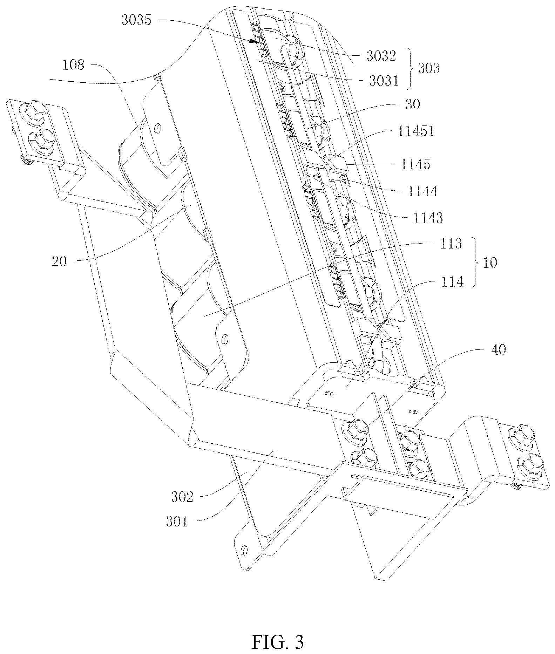

Please refer to FIG. 3, which is a schematic structural diagram of a battery module provided by an embodiment of the present disclosure. An embodiment of the present disclosure provides a battery module, which includes a battery cell 20 and the aforementioned battery cell bracket 10. The battery cell 20 is disposed in the accommodation cavity 108, and the electrodes of the battery cell 20 are located in the communication holes. It can be understood that the battery module includes a plurality of the battery cells. The plurality of the battery cells are connected in series or in parallel. The battery module is often used to provide power or are disposed in an energy storage device.

In the present embodiment, the battery module adopts the aforementioned cell bracket 10 so that the wiring harness for collecting the voltage information of the battery cell 20 is limited to the wiring groove 117, thereby making the wiring harness neatly arranged and conducive to the smooth progress of the glue injection operation, which in turn can improve the manufacturing efficiency of the battery module.

Please refer to FIG. 3, an embodiment of the present disclosure also provides a battery, including a conductive component, a fastening component and the aforementioned battery module. The conductive component is arranged on the outer surface of the bracket body and is electrically connected to the battery cell 20; the fastening component is provided on the bracket body and is configured to fasten the conductive component to the bracket body.

It can be understood that there are two conductive components, which are electrically connected to the positive electrode of the battery cell 20 and the negative electrode of the battery cell 20 respectively. The conductive component is metal and includes a bridging bar 301 and a bus structure. One end of the bridging bar 301 is electrically connected to one end of the bus structure, the other end of the bridging bar 301 is electrically connected to another battery module or electrical equipment, and the other end of the bus structure is electrically connected to the battery cell 20. The electrical connection between the bridging bar 301 and the bus structure can be achieved either by fitting or by plugging.

Exemplarily, the battery provides power to an electrical device. The electrical device may be, but is not limited to, an electric toy, an electric tool, a battery car, an automobile, a ship, a spacecraft, etc. Among them, the electric toy may include a fixed or mobile electric toy, such as a game console, an electric car toy, an electric ship toy, an electric airplane toys, etc., and the spacecraft may include an airplane, a rocket, a space shuttle, a spaceship, etc. The automobile may be a fuel automobile, a gas automobile, or a new energy automobile. The new energy vehicle may be a pure electric vehicle, a hybrid vehicle or an extended-range vehicle. The electrical device may include one battery or a plurality of batteries connected in series/parallel. The battery is electrically connected to the electrical equipment through the conductive components.

In the present embodiment, the battery adopts the aforementioned battery module, so that the wiring harness for collecting the voltage information of the battery cell 20 is limited to the wiring groove 117, thereby making the wiring harness arranged neatly, which is conducive to the smooth progress of the glue injection operations and in turn can improve the manufacturing efficiency of the battery module.

In the related art, a threaded hole is formed on the cell bracket 10, and the rod of the bolt pass through the bridging bar 301 and the bus structure and then are threadedly connected to the nut, thereby fixing the conductive component bar on the cell bracket 10 and making the bridging bar 301 and the bus structure pressed against each other to achieve electrical conduction therebetween. When the battery module is subjected to external force, the threaded hole formed on the cell bracket 10 is easily damaged, causing the failures such as crushing and cracking. At this time, the entire cell bracket 10 needs to be replaced, resulting in high cost. Based on this, the present disclosure provides the following implementation solutions to solve such problem.

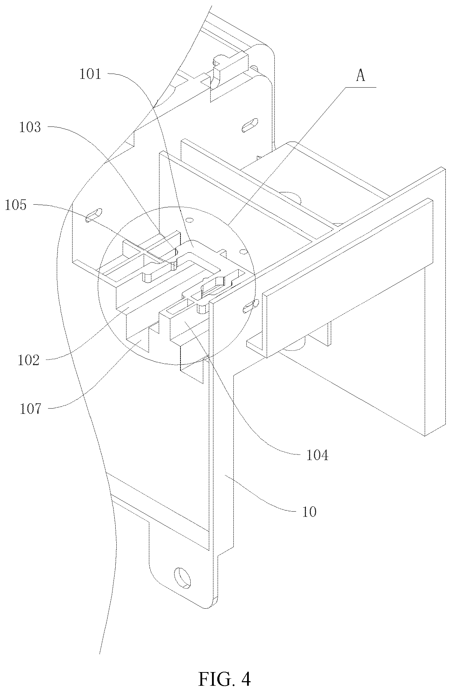

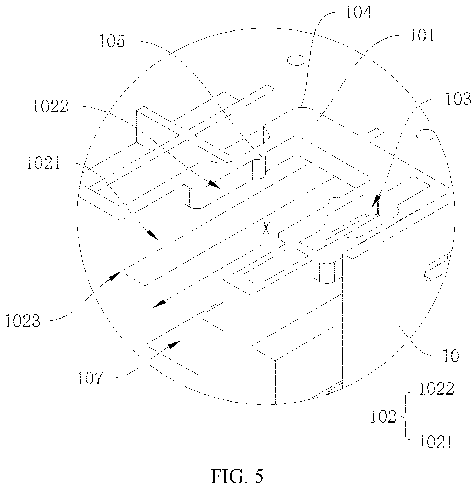

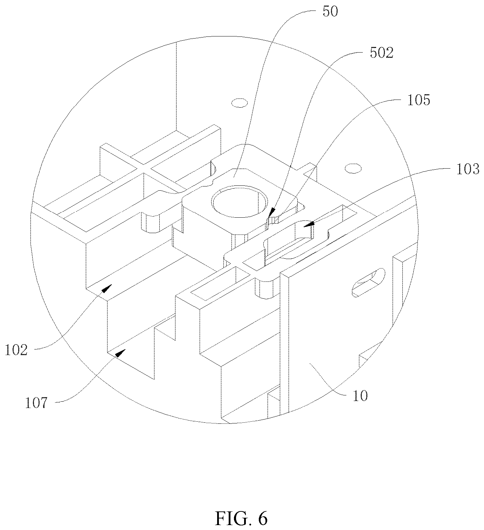

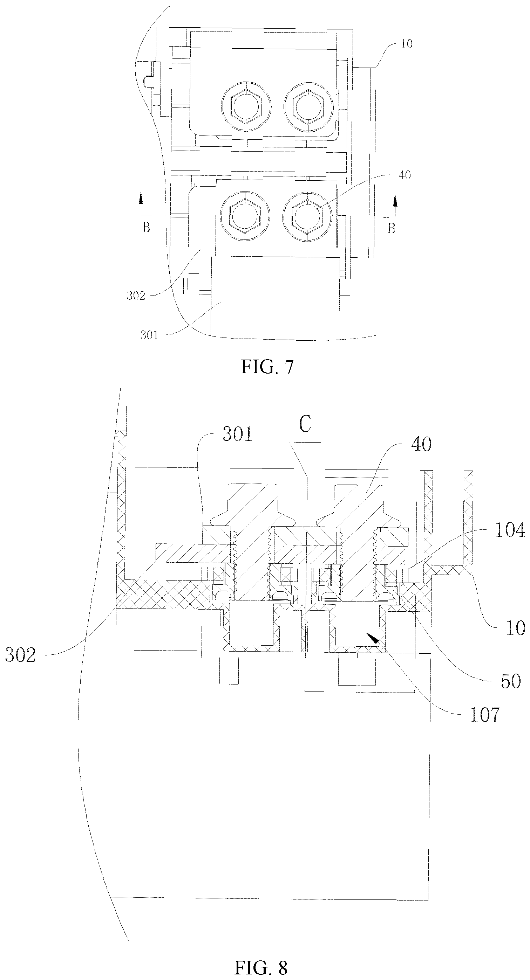

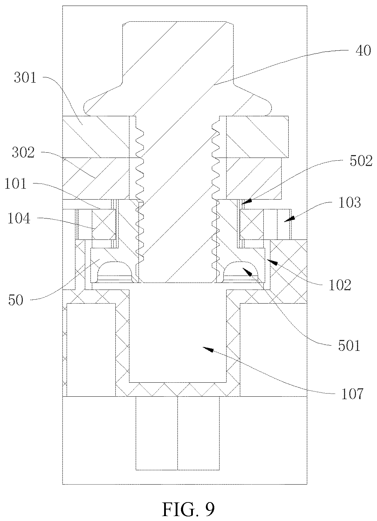

Please refer to FIGS. 4 to 6. In one embodiment, the bracket body has a first surface 101, and the first surface 101 is provided with a chute 102. The width of the slot opening of the chute 102 is smaller than the width of the bottom of the chute 102. One end of the chute 102 is provided with a first slot port 1023 that communicates with the outside, as shown in FIGS. 4 and 5. FIG. 4 is a schematic structural diagram of the chute 102 provided in the embodiment of the present disclosure. FIG. 5 is an enlarged view of A in FIG. 4. The conductive component is located above the slot opening of the chute 102, and is electrically connected to the battery cell 20. The fastening component includes a bolt 40 and a nut 50. The nut 50 is located in the chute 102 and blockin-fitted with the chute 102 along the axial direction of the nut 50, as shown in FIG. 6. FIG. 6 is a schematic diagram in which the but 50 is fitted with the chute 102 provided by an embodiment of the present disclosure. The screw of the bolt 40 passes through the conductive component and is connected to the nut 50, as shown in FIGS. 7 to 9. FIG. 7 is a top view of the fit between the conductive component and the fastening component provided by the embodiment of the present disclosure. FIG. 8 is a cross-sectional view along B-B in FIG. 7, and FIG. 9 is an enlarged view of C in FIG. 8.

It can be understood that the bolt 40 and the nut 50 are threadedly connected. The nut 50 is loaded into the chute 102 through the first groove port 1023 and fits with the chute 102 with a clearance. By setting the width of the slot opening to be smaller than the width of the slot bottom, the slot walls of the chute 102 and the outer peripheral surface of the nut 50 form a block-fit in the axial direction of the nut 50, thereby preventing the nut 50 from detaching from the slot opening of the chute 102. The screw rod may pass through the bridging bar 301 and the bus structure in sequence and then be threadedly connected to the nut 50 to fasten the conductive component on the bracket body.

Optionally, a slot end of the chute 102 away from the first slot port 1023 is a closed slot end. During use, by tightening the bolt 40 threadedly connected to the nut 50, it will help to increase the friction between the nut 50 and the chute 102, so that the nut 50 can be placed stably in the preset locking position.

Exemplarily, the chute 102 is a dovetail slot or an inverted T-shaped slot. When the chute 102 is a dovetail slot, the nut 50 is a trapezoidal nut. When the chute 102 is an inverted T-shaped slot, the nut 50 is a T-shaped nut, as shown in FIG. 6. A slot end of the chute 102 away from the first slot port 1023 is a closed slot end.

In the present embodiment, the nut 50 is separated from the cell bracket 10 and the nut 50 is installed using the chute 102 whose slot opening width is smaller than the width of the slot bottom, so that the nut 50 is block-fitted with the chute 102 in the axial direction of the nut 50. In this way, the nut 50 can be fixed through the block-fitting between the chute 102 and the nut 50, while when the nut 50 is damaged, the nut 50 can be withdrawn from the first slot port 1023 and replaced with a new nut 50 without replacing the battery cell bracket 10, thereby improving the maintainability of the nut 50 and reducing the maintenance cost of the battery.

In addition, by separating the nut 50 from the cell bracket 10, the nut 50 may be made of a material with higher strength, thereby extending the service life of the nut 50 and in turn decreasing the maintenance frequency of the battery to further reduce the maintenance cost of the battery. For example, the nut 50 may be a carbon steel nut, a stainless steel nut and a copper nut, etc.

Among them, by tightening the bolt 40, it will be helpful to increase the friction force between the nut 50 and the chute 102, so that the nut 50 can be stably placed in the preset locking position, thereby improving the positional stability of the conductive component.

Please refer to FIGS. 5 and 6. In one embodiment, in order to prevent the side wall of the damaged nut 50 from being closely attached with the wall of the chute 102 to cause the difficulty in disassembling the nut 50, the first surface 101 is further provided with a deformation groove 103. The deformation groove 103 is located at least on one side of the chute 102 in the width direction and is spaced apart from the chute 102.

Specifically, the first surface 101 is provided with a deformation groove 103 at one end in the width direction of the chute 102, and the deformation groove 1014 is spaced apart from the chute 102. Alternatively, the first surface 101 is provided with the deformation grooves 103 at both ends of the first surface 101 in the width direction of the chute 102, and the deformation grooves 1014 are spaced apart from the chute 1013.

In the present embodiment, when the damaged nut 50 is disassembled, the groove wall of the chute 102 may be squeezed, so that the walls of the chute 102 are pressed against the deformation groove 103, thereby forming a gap between the groove wall of the chute 102 and the nut 50 to facilitate the smooth disassemble of the nut 50.

Please refer to FIG. 5. In one embodiment, a mounting table 104 is protruded from the bracket body. The side of the mounting table 104 away from the bracket body is the first surface 101. The chute 102 and the deformation groove 103 are both disposed on the mounting table 104.

For example, the deformation groove 103 is provided on the edge of the mounting table 104.

It can be understood that since the edge is formed by connecting two mutually perpendicular side walls of the mounting table 104, a part of opening of the deformation groove 103 located on the edge is disposed on one side wall, and the other part of the opening of the deformation groove 103 is disposed on another side wall that is vertically connected to the side wall.

Exemplarily, the two groove walls of the deformation groove 103 in the extension direction X of the chute 102 are smoothly connected to the groove wall of the deformation groove 103 close to the chute 102. As such, it is possible to reduce the stress at the angle between two adjacent groove walls when the deformation groove 103 is deformed, thereby improving the stress state of the deformation groove 103 and in turn avoiding fatigue of the material, which thus can improve the service life of the mounting table 104. Since the edge has greater stress when the mounting table deforms, arranging the deformation groove 103 on the edge of the mounting table 104 may reduce the stress on the edge during deformation, so that the mounting table 104 can maintain high deformation flexibility.

In the present embodiment, by arranging both the chute 102 and the deformation groove 103 on the mounting table 104, when squeezing the groove wall of the chute 102, it only needs to overcome the deformation resistance of the corresponding part on the mounting table 104, such that it is possible to reduce the external force required to squeeze the groove wall of the chute 102 to form a gap, thereby improving the ease of operation of removing the damaged nut 50, which thus may improve the maintenance convenience of the battery.

Please refer to FIG. 6. In one embodiment, the groove wall of the chute 102 is provided with a first snap-fitting structure 105. The outer peripheral surface of the nut 50 is provided with a second snap-fitting structure 502. The first snap-fitting structure 105 is snap-fitted with the second snap-fitting structure 502.

It can be understood that the first snap-fitting structure 105 is a convex structure or a recess structure. Correspondingly, the second snap-fitting structure 502 is a recess structure snap-fitted with the convex structure or a convex structure snap-fitted with the recess structure.

Exemplarily, the first snap-fitting structure 105 is a convex structure, and the second snap-fitting structure 502 is a convex structure. At this time, when the nut 50 is installed in the chute 102, as the nut 50 is pushed in a direction away from the first slot port 1023, the outer peripheral surface of the nut 50 squeezes the convex structure, so that the convex structure is compressed until the convex structure corresponds with the recess structure and is inserted into the recess structure. At this time, the nut 50 is placed at the pre-set position.

In the present embodiment, by providing the first snap-fitting structure 105 and the second snap-fitting structure 502 that snap-fitted with each other, the nut 50 can be limited when it moves to the preset position, so as to prevent the nut 50 from moving back and forth in the extending direction Z of the chute 102. As such, the positional stability of the nut 50 is improved, thereby improving the positional stability of the conductive component.

Please refer to FIG. 5. In one embodiment, the chute 102 includes a first section 1021 and a second section 1022 that are communicated in sequence from the first slot port 1023 to the other slot end of the chute 102. The width of the slot of the first section 1021 is consistent with the width of the slot bottom. The slot width of the second section 1022 is smaller than the width of slot bottom. For example, the second section 1022 is an inverted T-shaped slot.

This arrangement can, on the one hand, reduce the material consumption amount of the mounting table 104, thereby reducing the material cost of the mounting table 104. On the other hand, it can help reducing the space required for disassembling and assembling the nut.

Please refer to FIGS. 5 and 6. In one embodiment, an abdicating slot 107 is provided at the bottom of the chute 102. A second slot port is provided at one end of the abdicating slot 107, and the second slot port communicates with the outside and the first slot port 1023. A clamping hole 501 is provided on the side of the nut 50 close to the abdicating slot 107, and the clamping hole 501 is disposed opposite to the abdicating slot 107, as shown in FIG. 9.

In the present embodiment, when it is inconvenient to apply force to remove the nut 50, a tool may be used to probe under the nut 50 from the abdicating slot 107, thereafter the tool is inserted into the clamping hole 501, and then the nut 50 is pulled outward to disassemble the nut 50.

In addition, by providing the abdicating slot 107, it is possible to prevent the bolt 40 from being too long to cause interference with the bottom of the chute 102, thereby allowing a wide range of lengths of the bolt 40 to be selected.

In the related art, the battery module is equipped with a temperature sensor to collect the temperature information of the battery cell 20, so that the working condition of the battery cell 20 can be monitored, thereby optimizing the performance of the battery module and improving the security of the battery module. The temperature sensor is directly arranged on the battery cell bracket 10 or tied to the peripheral surface of the battery cell 20. This results in poor installation convenience of the temperature sensor, which in turn leads to low assembly efficiency of the battery module. Based on this, the present disclosure provides the following implementation solutions to solve this problem.

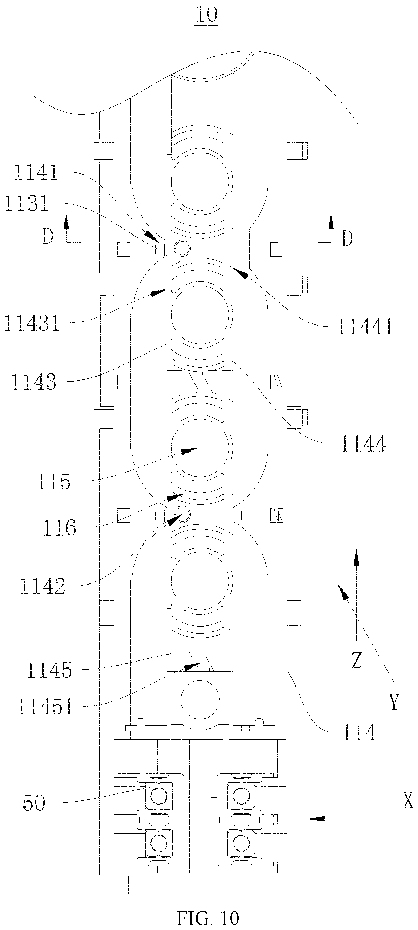

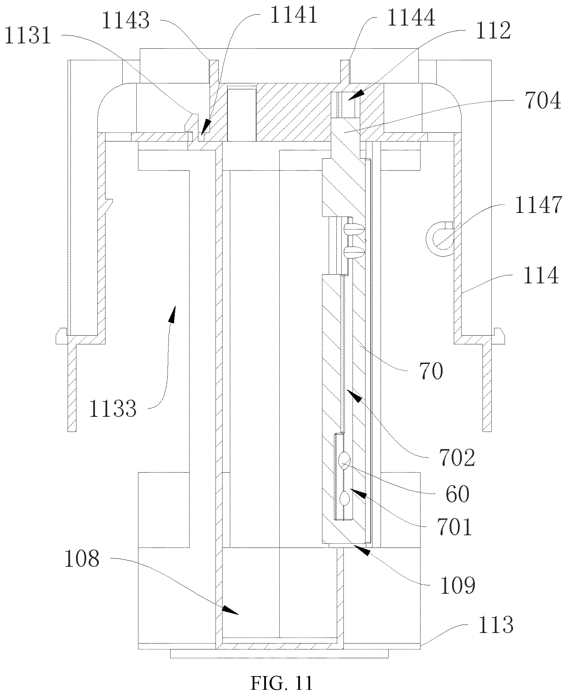

Please refer to FIGS. 10 to 11. FIG. 10 is a top view of FIG.1, and FIG. 11 is a cross-sectional view along D-D in FIG. 10. In one embodiment, the battery further includes a temperature sensor 60, and a first mounting portion 109 is provided on the bracket body. Along the radial direction of the battery cell 20, the first mounting portion 109 communicates the accommodation cavity 108 with the outside; a mounting bracket 70 is provided on the first mounting portion 109. The temperature sensor 60 is installed on the mounting bracket 70 and is attached with the outer peripheral surface of the battery cell 20.

Exemplarily, the mounting bracket 70 may be formed separately with the bracket body and then fixed together. The mounting bracket 70 may also be installed on the bracket body through plugging, snapping, screw connection, etc. The temperature sensor 60 may be installed on the mounting bracket 70 through plugging, snapping, screw connection, glue bonding, etc.

In the present embodiment, the temperature sensor 60 may be fixed on the mounting bracket 70 firstly by making the part of the cell bracket 10 for installing the temperature sensor 60 (i.e., the mounting bracket 70) independent from the remaining parts of the bracket body. Then the mounting bracket 70 is disposed on the bracket body. As such, the remaining parts of the cell bracket 10 may be avoided from hindering the installation of the temperature sensor 60, thereby improving the convenience of installing the temperature sensor 60 on the cell bracket 10, which in turn improve the assembly efficiency of the battery using the cell bracket 10.

In addition, the different mounting brackets 70 may be configured according to the temperature collection positions corresponding to the different battery cells 20. This not only improves the adjustability of the battery cell bracket 10, but also makes the temperature sensor 60 consistent with the location in the battery module where temperature collection is required, thereby more accurately reflecting the minimum and maximum temperatures of the battery module. It is conducive to monitoring the working condition of the battery and optimizing the battery performance, thereby improving the safety of the battery.

Please refer to FIG. 11. In one embodiment, the mounting bracket 70 is plugged in the bracket body. It can be understood that the mounting bracket 70 is fixed on the bracket body by plugging in the bracket body. There is an interference fit in the plugging structure between the mounting bracket 70 and the bracket body.

Exemplarily, the mounting bracket 70 is provided with a plugging shaft 704. The bracket body is provided with a plugging hole 112 that interference fits with the plugging shaft 704. Alternatively, a hole body may be provided on the mounting bracket 70 and a shaft body may be provided on the bracket body. The mounting bracket 70 may be fixed to the bracket body through an interference fit between the shaft body and the hole body. The amount of the interference fit between the plugging shaft 704 and the plugging hole 112 is 0.08mm-0.4mm, and further 0.1mm~0.4mm. And the plugging shaft 704 has a draft angle, and the draft angle is optionally 0.8°~5°, and further 1°~4°. By setting the draft angle, the plug shaft 704 may be plugged into the plugging hole 112 more smoothly.

In the present embodiment, the mounting bracket 70 and the bracket body are fixed by interference fit between the plugging shaft 704 and the plugging hole 112, making the battery assembly simple and easy to operate; By configuring a pulling force greater than the friction force between the plugging shaft 704 and the plugging hole 112, the mounting bracket 70 can be disassembled from the bracket body, which facilitates subsequent maintenance and improves maintenance efficiency.

Further, the cross section of the plug hole 112 has at most one central line of symmetry.

It can be understood that the shape and size of the cross-section of the plugging shaft 704 is adapted to the shape and size of the cross-section of the plugging hole 112 so that the mounting bracket 70 is fixed on the bracket body through plugging connection. The cross-section of the plugging hole 112 is non-circular, and correspondingly, the cross-section of the plugging shaft 704 is also non-circular. The cross-section of the plugging hole 112 may be either an asymmetric structure or a symmetric structure. When the structure is symmetrical, the cross section of the plugging hole 112 has only one central line of symmetry. Specifically, the plugging hole 112 includes a circular hole and a rectangular hole that communicate with each other. One side of the rectangular hole is connected to the circular hole, and both ends of the other side of the rectangular hole are rounded.

In the present embodiment, by configuring the plugging hole 103 to the above structure, it can not only prevent the mounting bracket 20 from rotating relative to the bracket body 10, but also have a foolproof effect to avoid or reduce assembly errors by the assembly personnel.

As shown in FIG.11, in one embodiment, the bracket body is provided with a thread hanging hook 1147, and the thread hanging hook 1147 is located outside the accommodation cavity 108 and is disposed opposite to the mounting bracket 70.

Exemplarily, the thread hanging hook 1147 has a circular ring structure, and its outer peripheral surface is connected to the bracket body. A thread clamping opening is provided on the outer peripheral surface, and the thread clamping opening obliquely extends from one end surface of the circular ring to the other end surface of the circular ring. The wire harness is clamped into the thread hanging hook 1147 through the thread clamping opening.

In the present embodiment, by providing the thread hanging hook 1147, the wire harness at the module can be arranged neatly, thereby facilitating the threading operation and subsequent maintenance.

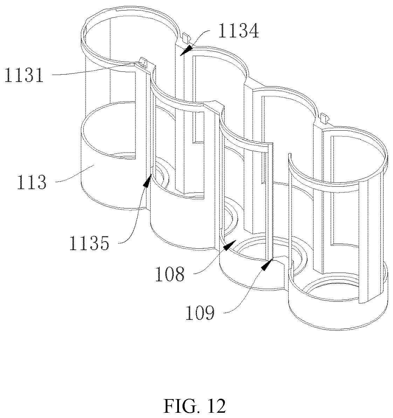

Please refer to FIG. 12, which is a partial structural diagram of the battery cell bracket 10 provided by an embodiment of the present disclosure. In one embodiment, there are a plurality of accommodating cavities 108 and a plurality of battery cells 20, and the plurality of battery cells 20 and the plurality of accommodating cavities 108 are arranged in one-to-one correspondence; the first mounting portion 109 is located between two adjacent battery cells 20, and the temperature sensor 60 collects the temperature of the two adjacent battery cells 20.

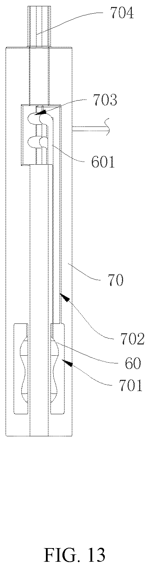

Exemplarily, as shown in FIG. 13, FIG. 13 is a front view of the mounting bracket 70 provided by an embodiment of the present disclosure. The mounting bracket 70 is provided with a collection end mounting slot 701 and a wire harness mounting slot 702 that are communicated in sequence on a side close to the accommodation cavity 108. The collection end mounting slot 701 is configured to install the collection end of the temperature sensor 60, and the wire harness mounting slot 702 is configured to install the first signal line 601 that connects the temperature sensor 60 to the controller signal. A threading hole 703 is provided at the bottom of the wire harness mounting slot 702 and on the side away from the collection end mounting slot 701. The first signal line 601 passes through the threading hole 703 to connect to the controller signal. And, both sides of the opening of the collection end mounting slot 701 are communicated with two adjacent accommodation cavities 108 respectively, so that the collection end of the temperature sensor 60 located in the collection end mounting slot 701 can collect the temperature of the two adjacent battery cell 20.

In the present embodiment, by disposing the mounting bracket 70 between two adjacent battery cells 20, the temperature sensor 60 can collect the temperature of the two adjacent battery cells 20, thereby enabling temperature collection of the multiple battery cells by installment at one time, which thus can not only improve the accuracy of temperature collection of the battery, but also control the number of temperature sensors 60 to reduce the manufacturing cost of the battery.

In the related art, the battery module is integrated by the glue filling manner. During the glue filling, the glue flows from the top of the battery bracket into the accommodation cavity for installing the battery cell 20 in the battery bracket 10, and along with the glue filling action, the glue flows to the bottom of the accommodation cavity. The bottom of the accommodation cavity is an open structure and is only covered with a cover plate. This causes some glue to overflow from the area between the open structure and the cover during glue filling, contaminating the outer wall of the module. Based on this, the present disclosure provides the following implementation solutions to solve this problem.

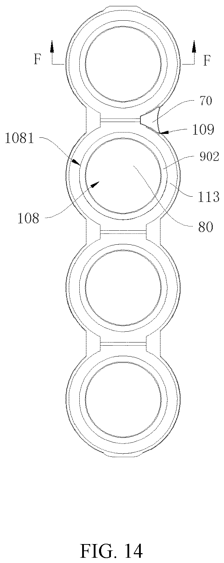

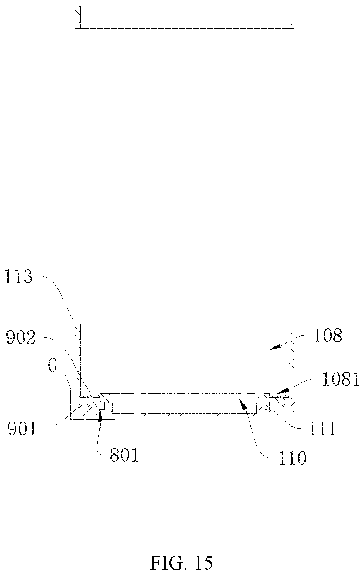

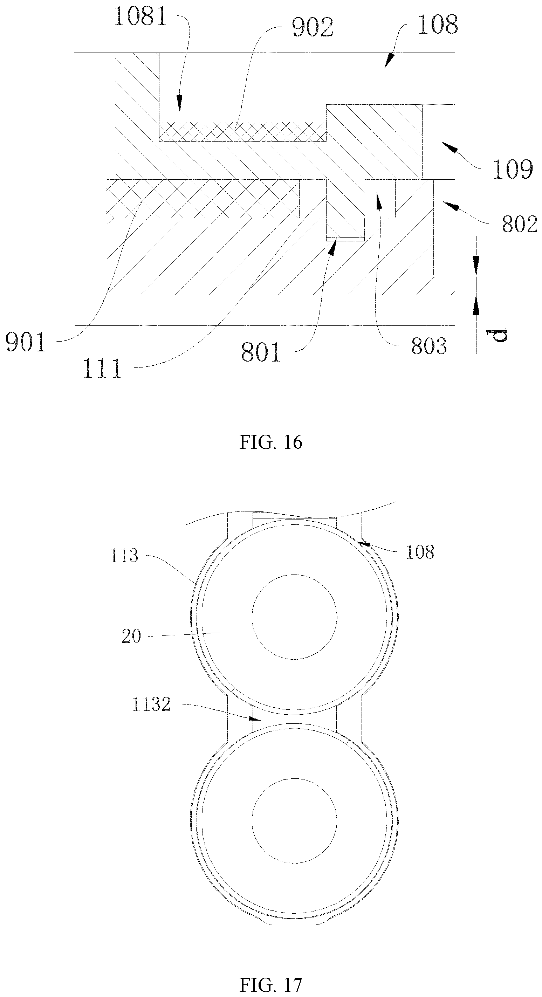

Please refer to FIG S. 14 to 16. FIG.14 is a top view of part of the cell bracket 10 provided by an embodiment of the present disclosure. FIG. 15 is a cross-sectional view along F-F in FIG. 14. FIG. 16 is an enlarged view of G in FIG.15. In one embodiment, a first through hole 110 is opened on the side of the accommodation cavity 108 away from the wiring groove 117, and the accommodation cavity 108 communicates with the outside through the first through hole 110. A first plugging structure 111 is provided on the outer wall of the bracket body. The battery module also includes a blocking cover 80, which is provided on the outer wall of the bracket body and seals the first through hole 110. A second plugging structure 801 is provided on the side of the blocking cover 80 towards the bracket body. The second plugging structure 801 and the first plugging structure 111 are plugged in along the periphery of the first through hole 110. It can be understood that the blocking cover 80 is a plastic part, which is formed by injection molding. The first through hole 110 is used for pressure relief when the battery cell 20 is thermally runaway.

It can be understood that the plug-in between the first plugging structure 111 and the second plugging structure 801 is an interference fit, so that the blocking cover 80 can be disposed on the outer wall of the bracket body through the interference fit. The first plugging structure 111 and the second plugging structure 801 are both annular structures extending along the periphery of the first through hole 110. The cell bracket 10 and the blocking cover 80 are plastic parts, which are separately molded by injection molding. The first through hole 110 is used for pressure relief when the battery cell 20 is thermally runaway, and is arranged opposite to the explosion-proof valve on the battery cell 20. When the explosion-proof valve is triggered, the high-pressure fluid leaked from the battery cell 20 through the explosion-proof valve can break through the blocking cover 80 or flush the blocking cover 80 away from the bracket body.

Exemplarily, the first plugging structure 111 is an annular blocking rib, the second plugging structure 801 is an annular groove, and the blocking rib is inserted into the annular groove. Alternatively, the first plugging structure 111 may be an annular groove, and the second plugging structure 801 may be a blocking rib. It is also possible that the first plugging structure 111 is a plurality of coaxially arranged blocking ribs, and the second plugging structure 801 is a plurality of coaxially arranged annular grooves, and the plurality of blocking ribs correspond to the plurality of annular grooves one by one.

In the present embodiment, when filling the glue, the glue flows into the bottom of the accommodation cavity 108, and part of the glue is blocked by the blocking cover 80 to prevent the glue from flowing to the outside of the bracket. When another part of the glue flows to the plug-in point between the first plugging structure 111 and the second plugging structure 801, the cross-section of the channel for the glue flowing in the plugging structure decreases sharply, thus creating resistance to the flow of glue. This prevents the glue from overflowing and improves the glue overflow prevention performance. As such, it is possible to prevent the glue from overflowing and contaminating the outer wall of the battery module during the glue filling.

Please refer to FIG. 16. In one embodiment, a first adsorption member 901 configured to absorb the glue is provided between the blocking cover 80 and the bracket body. The first adsorption member 901 is the annular structure that is provided and extends along the periphery of the first through hole 110. Both sides of the first adsorption member 901 are connected to the bracket body and the blocking cover 80 respectively.

Exemplarily, the first adsorption member 901 may be foam, sponge, soft silicone, elastic rubber, etc. with glue storage channels. The first adsorbing member 901 is adhered to the bracket body or the blocking cover 80 via the glue. The first adsorbing member 901 may be located on the side of the second plugging structure 801 close to the first through hole 110, or may be located on the side of the second plugging structure 801 away from the first through hole 110.

In the present embodiment, the glue is absorbed by the first adsorption member 901 to prevent the glue from overflowing and contaminating the outer wall of the module. In addition, connecting the bracket body with the blocking cover 80 by the first adsorbing member 901 can improve the stability of the connection between the blocking cover 80 and the bracket body and prevent the blocking cover 80 from being detached from the bracket body.

Please refer to FIG. 16. In one embodiment, a first annular groove 1081 is provided on the bottom wall of the accommodation cavity 108. A second adsorption member 902 configured to adsorb the glue is provided in the first annular groove 1081. The second adsorbing member 902 is an annular structure that is provided and extends along the periphery of the first through hole 110.

Exemplarily, the second adsorption member 902 is the same as the first adsorption member 901, and may be foam, sponge, soft silicone, elastic rubber, etc. with glue storage channels. The second adsorption member 902 is adhered to the bracket body via the glue.

In the present embodiment, the glue is stored in the first annular groove 1081 and the second adsorption member 902 absorbs the glue to reduce the fluidity of the glue, thereby further improving the glue overflow prevention performance and in turn preventing the glue from overflowing and contaminating the outer wall of the battery module.

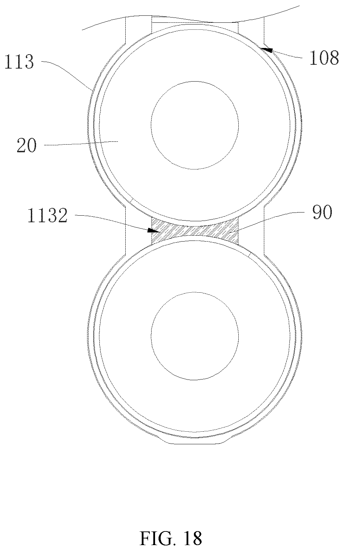

Please refer to FIGS. 17 and 18. FIG. 17 is a schematic diagram of the position of the communication groove provided by the embodiment of the present disclosure. FIG. 18 is a schematic diagram of a part of the glue filling positions when the bracket body is filled with the glue provided by the embodiment of the present disclosure. In one embodiment, there are a plurality of accommodation cavities 108, and a communication groove 1132 is provided between two adjacent accommodation cavities 108. The communication groove 1132 connects through the two adjacent accommodation cavities 108 and communicates to the outside at one end thereof away from the bottom wall of the accommodation cavity 108 so as to allow the glue to flow into the communication groove 1132 from such end. A glue filling hole 1142 is provided in the wiring groove 117 at a position opposite to the communication groove 1132. It can be understood that when filling the glue, as shown in FIG. 18, the glue enters the communication groove 1132 from the glue filling hole 1142, and then flows between the battery cells 20 to bond the first bracket 113, the second bracket 114, the battery cell 20, and the temperature sensor and the blocking cover 80 together.

In the present embodiment, by providing the communication groove 1132, the glue from the glue filling equipment can be evenly flowed to the two accommodating cavities 108, so that the two accommodating cavities 108 can complete the glue injection simultaneously; In addition, two adjacent battery cells 20 can be connected via the glue, thereby improving the integrity of the battery module.

Please refer to 16. In one embodiment, a reserved groove 802 is provided on a side of the blocking cover 80 close to the bracket body, and the reserved groove 802 is provided opposite to the first through hole 110.

Since the first through hole 110 is disposed opposite to the explosion-proof valve of the battery cell 20, the portion of the blocking cover 80 opposite to the first through hole 110 is rendered opposite to the explosion-proof valve. In order to improve the working stability of the explosion-proof valve and ensure the normal operation of the explosion-proof valve, a reserved groove 802 is provided on the blocking cover 80 at a position opposite to the first through hole 110, so that the spacing between the blocking cover 80 and the explosion-proof valve is increased via the reserved groove 802. As such, the space for the explosion-proof valve to erupt is further ensured, so that the explosion-proof valve can work normally.

Please refer to FIG. 16. In one embodiment, the distance between the side of the blocking cover 80 away from the bracket body and the bottom of the reserved groove 802 is d, which satisfies 0.2mm≤d ≤1mm.

It can be understood that the smaller the distance d is, the lower the strength of the blocking cover 80 is. Therefore, in order to ensure the strength of the blocking cover 80, a minimum value is set for the distance d so as to meet the strength requirement of the blocking cover 80. When the distance d is larger, the requirement on the impact force of the explosion-proof valve will be higher. Therefore, the maximum value of the distance d is limited in combination with the performance of the explosion-proof valve.

Exemplarily, 0.4mm≤d≤0.6mm, further, d=0.5mm. The reserved groove 802 is a cylindrical groove structure, and the diameter of the reserved groove 802 is smaller than the diameter of the first through hole 110.

In the present embodiment, by defining the distance d, the blocking cover 80 is imparted with flexibility, so that after the battery module is assembled, it may be determined whether the reserved groove 802 is filled with the glue by pressing the blocking cover 80. Specifically, if the part of the blocking cover 80 opposite to the first through hole 110 is pressed so that the blocking cover 80 is deformed, the reserved groove 802 will not be filled with glue, which is conducive to the normal operation of the explosion-proof valve. On the contrary, if the blocking cover 80 cannot be deformed or the deformation amount is small, it can be determined as a waste product and needs to be recirculated for repairmen. Regarding the above-mentioned pressing of the blocking cover 80, a detection device with a certain pressing force may be configured, the blocking cover 80 is pressed with the same pressing force, and the deformation amount of the blocking cover 80 is detected by the deformation detection device, so as to determine whether the reserved groove 802 is filled with the glue according to the measured deformation amount.

Please refer to FIG.16. In some embodiments, an annular groove body 803 is provided on the blocking cover 80 between the second plugging structure 801 and the reserved groove 802. In this way, when the glue flows out of the first through hole 110, the glue flows along the gap between the blocking cover 80 and the bracket body to the side away from the first through hole 110. When the glue flows to the groove body 803, the glue firstly remains in the groove body 803, thereby preventing the glue from flowing to the outside of the battery cell bracket 10, which further improves the glue overflow prevention performance.

Exemplarily, the outer periphery of the groove body 803 is connected to the outside. When the second plugging structure 801 is an annular groove, it is provided at the bottom of the groove body 803. A gap is deposed between the inner peripheral groove wall of the groove body 803 and the first plugging structure 111 to store the overflowing glue.

In one embodiment, there is a plurality of accommodation cavities 108, which are arranged at intervals along the first direction. The bottom wall of each of the accommodation cavities 108 is provided with the first through holes 110. There is a plurality of blocking covers 80, which are arranged in one-to-one correspondence with the first through holes 110.

It can be understood that the first direction is a direction perpendicular to the axis of the accommodation cavity 108.

In the present embodiment, the plurality of accommodating cavities 108 are provided on the same bracket body, which can improve the integrity of the accommodating cavities 108 used to install the battery cells 20, thereby enhancing the wholeness of the battery cells 20 disposed in these accommodating cavities 108.

Exemplarily, four of the receiving cavities 108 are provided on the bracket body. Correspondingly, four of the battery cells 20 are disposed corresponding to the four accommodation cavities 108.

In one embodiment, two adjacent blocking covers 80 are connected as one body.

Exemplarily, when four of the receiving cavities 108 are provided on the bracket body, the corresponding four blocking covers 80 are connected into an integrated structure, as shown in FIG.5.

In the present embodiment, by connecting two adjacent blocking covers 80 into an integrated structure, the plurality of blocking covers 80 may be disposed on the corresponding first through holes 110 in one assembly, thereby improving assembly efficiency.

Please refer to FIG.12. In one embodiment, a glue filling groove 1134 is provided on the bracket body. The glue filling groove 1134 is located between two adjacent accommodation cavities 108 and connects through the two adjacent accommodation cavities 108.

It can be understood that during glue filling, the glue flows into the space between the bracket body and the battery cell 20 from the end of the glue filling groove 1134 away from the first through hole 110.

In the present embodiment, by setting the glue filling groove 1134, the glue from the glue filling equipment can flow evenly to the two accommodation cavities 108, so that the two accommodation cavities 108 can complete the glue injection simultaneously, while two adjacent battery cells 20 can be connected via the glue, thereby improving the integrity of the battery module, as shown in FIG. 17. FIG. 17 is a schematic diagram of a part of the glue filling positions when filling the battery cell bracket 10 provided by the embodiment of the present disclosure.

Please refer to FIG.12. In one embodiment, a second through hole 1135 is provided on the inner peripheral surface of the accommodation cavity 108. The second through hole 1135 extends in a direction perpendicular to the first direction.

The second through hole 1135 is provided in a direction perpendicular to the first direction, so as not to destroy the glue injection space between two adjacent battery cells 20, but also allowing the battery cell 20 to dissipate heat outward through the second through hole 1135, thereby improving the heat dissipation efficiency of the module. In addition, the second through hole 1135 may also be provided so that the bracket body can be deformed through the second through hole 1135 for structural fine-tuning, thereby allowing the portion of the bracket body opposite to the outer peripheral surface of the battery cell 20 to fit the battery cell 20 more closely, which in turn ensures that the bracket body functions to support the battery cell 20.

In the related art, the bus structure usually adopts a metal bar to connect the battery cells 20. In order to meet the overcurrent requirement, the thickness of the metal bar is set larger. When the thickness of the metal bar is large, uneven cooling during manufacturing will cause greater stress inside the metal bar, resulting in deformation of the metal bar and a decrease in its flatness. As a result, the fit between the metal bar and the poles of the battery cell 20 will be poor, resulting in poor electrical connection stability between them. Based on this, the present disclosure provides the following implementation solutions to solve this problem.

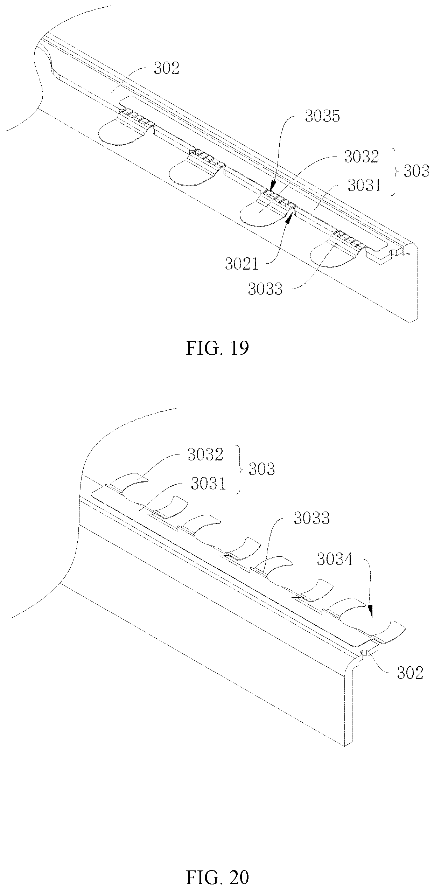

Please refer to FIG.19, which is a schematic structural diagram of a bus structure provided by an embodiment of the present disclosure. In one embodiment, the conductive component includes a bridging bar 301 and a bus structure. The bus structure includes a connection bar 303 that is electrically connected to the battery cell 20 and a bus bar 302 that is electrically connected to the connection bar 303. One end of the connection bar 303 is located in the wiring groove 117 and the other end is located outside the wiring groove 117 and is electrically connected to the bus bar 302. The bus bar 302 is disposed on the bracket body and is electrically connected to the bridging bar 301. The threaded rod of the bolt 40 penetrates through the bridging bar 301 and the bus bar 302 and is connected to the nut 50.

It can be understood that the bridging bar 301, the bus bar 302 and the connection bar 303 are used for current transmission, and they are all metal parts. The connection bar 303 is made in contact with the electrodes of the battery cell 20 to achieve electrical connection with the battery cell 20. The bus bar 302 is made in contact with the connection bar 303 to achieve electrical connection therebetween. The bus bar 302 may be bonded to the bracket body via the glue. The bracket body is provided with a positive communication hole 115 and a negative communication hole 116. One end of one connection bar 303 passes through the positive communication hole 115 and is electrically connected to the positive electrode of the battery cell 20, and one end of the other connection bar 303 passes through the negative communication hole 116 and is electrically connected to the negative electrode of the battery cell 20.

Exemplarily, the connection bar 303 is a sheet-like structure, which is attached to the electrodes of the battery cell 20 and can be fixedly connected to the battery cell 20 via welding. The connection bar 303 can be formed by stamping. The bus bar 302 can be electrically connected to the connection bar 303 by fitting, abutting, plugging, welding etc., and the thickness of the bus bar 302 is greater than the thickness of the connection bar 303.

The conductive component electrically connected to the positive electrode of the battery cell 20 is a positive conductive component, as shown in FIG. 19. The conductive component electrically connected to the negative electrode of the cell 20 is a negative conductive component, as shown in FIG. 20. FIG. 20 is a schematic structural diagram of another bus structure provided by an embodiment of the present disclosure.

In the present embodiment, by arranging the conductive components into the above structure, the bus bar 302 may be made to have a larger thickness so as to meet the overcurrent requirement, while the thickness of the connection bar 303 may be reduced, thereby reducing the internal stress of the connection bar 303, which further improves the flatness of the connecting bar 303. As a result, the fit between the bus structure and the contact portion of the battery cell 20 is improved, thereby improving the stability of the electrical connection between the conductive component and the electrodes of the battery cell 20. In addition, arranging the conductive component into the above structure enable the bus bar 302 and the connection bar 303 with an inconsistent thickness to be stamped and formed separately, thereby avoiding the complexity of the stamping process due to the inconsistent thicknesses when the two components are stamped together, which is thus beneficial to control manufacturing costs.

Furthermore, arranging the conductive component into the above structure allows the bus bar 302 and the connection bar 303 to adopt the different materials, thereby making the material selection of the two more extensive, and then on the basis of meeting the electrical connection requirement, it is possible to reduce the material costs. For example, the bus bar 302 may be a copper bar, and the connection bar 303 may be an aluminum bar.

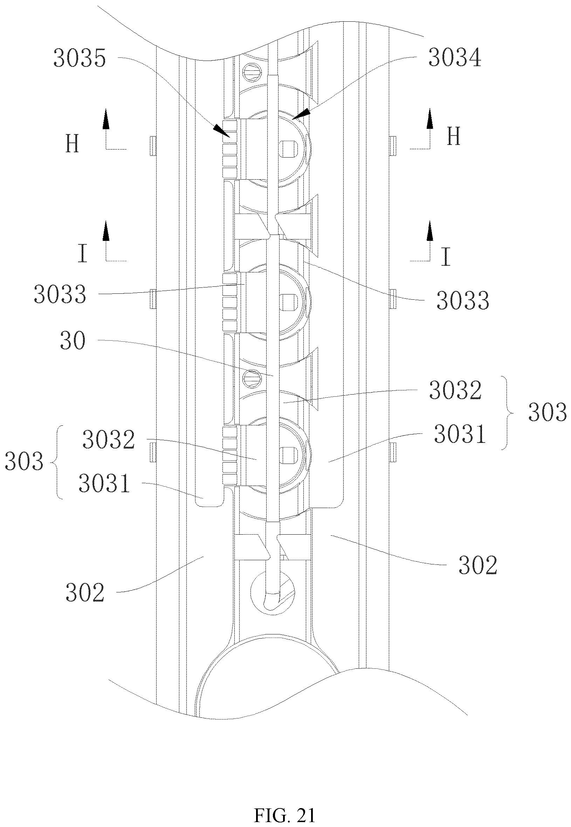

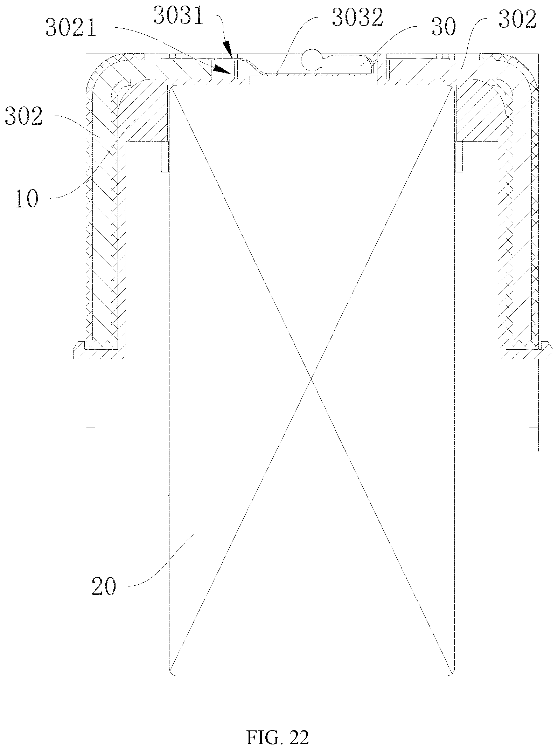

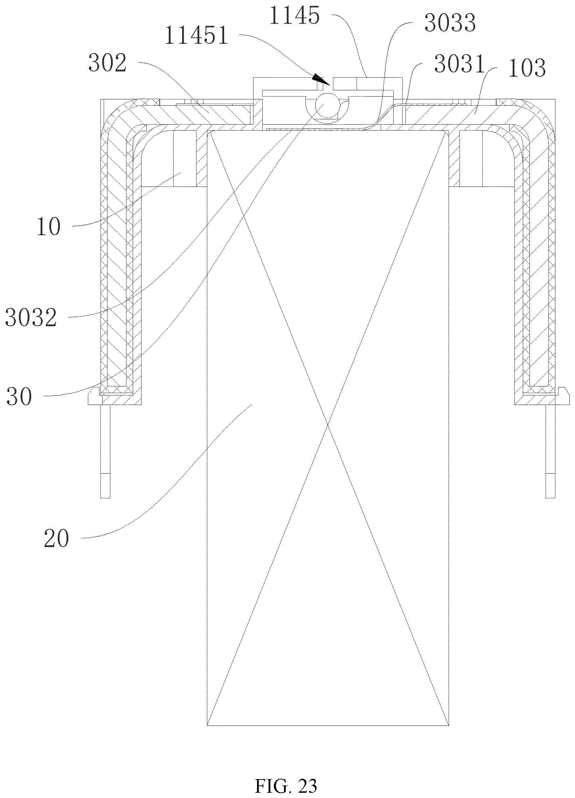

Please refer to FIGS. 21 to 23. FIG. 21 is a top view of FIG. 3, and FIG. 22 is a cross-sectional view along H-H in FIG. 21; FIG. 23 is a cross-sectional view taken along line I-I in FIG.21. In one embodiment, the bus bar 302 is disposed between the connection bar 303 and the bracket body, and is located on one side of the battery cell 20. It can be understood that the bracket body insulates and separates the bus bar 302 from the battery cell 20. The bus bar 302 and the connection bar 303 overlap on the side away from the battery cell 20, thereby realizing the electrical connection between the bus bar 302 and the connection bar 303, and the bus bar 302 and the connection bar 303 partially overlap along the axial direction of the battery cell 20.

Exemplarily, the connection bar 303 includes a main body portion 3031 and a connection portion 3032 for an electrical connection with the battery cell 20. The connecting portion 3032 is connected to the main body portion 3031 integrally, and there are multiple connecting portions 3032. The number of the connecting portions 3032 is consistent with the number of the battery cells 20 and corresponds to the battery cells 20 one-to-one. The bus bar 302 overlaps the main body part 3031.

In the present embodiment, the bus bar 302 is disposed between the connection bar 303 and the bracket body, so that the deformation of the bus bar 302 towards the battery cell 20 will be blocked by the bracket body, while the deformation towards the connection bar 303 will drive the synchronous movement of the connection bar 303 with the bus bar 302, thereby keeping the bus bar 302 in good contact with the connection bar 303 to improve the electrical connection stability of the bus bar 302 and the connection bar 303 .

Please refer to FIG. 21. In one embodiment, there are two conductive components, namely a positive conductive component electrically connected to the positive electrode of the battery cell 20 and a negative conductive component electrically connected to the negative electrode of the battery cell 20. In the positive conductive component, the connection bar 303 is connected to the positive electrode of the battery cell 20, as shown in FIG. 19. When used in a cylindrical battery cell, an avoidance through hole 3034 is provided on the connecting portion 3032 of the negative conductive component, and the side of the avoidance through hole 3034 away from the main body portion 3031 connected thereto is connected to the outside, as shown in FIG. 20. The positive electrode of the battery cell 20 is located in the avoidance through hole 3034, as shown in FIG. 21.

It can be understood that when the battery cell 20 is a cylindrical battery cell, the positive electrode of the battery cell 20 is located at the center of the end surface of the battery cell 20, and the negative electrode of the battery cell 20 is located on the outer periphery of the positive electrode of the battery cell 20. Specifically, it may be the positive electrode setup surrounding the battery cell 20.

Exemplarily, the connecting portion 3032 of the positive conductive component is located in the positive electrode connecting hole 115 and is electrically connected to the positive electrode of the battery cell 20. The connecting portion 3032 of the negative conductive component is located in the negative electrode connecting hole 116 and is electrically connected to the positive electrode of the battery cell 20.

In the present embodiment, when ensuring a sufficient contact surface between the connecting portion 3032 and the electrodes of the battery cell 20, the avoidance through hole 3034 is provided so that the connecting portion 3032 in the negative conductive component avoids the positive electrode of the battery cell, which is conducive to the partitioning of the negative conductive component and the positive conductive component without interfering with each other.

Please refer to FIGS. 22 and 23. In one embodiment, the connection bar 303 has a bending portion 3033, and the bending portion 3033 is configured to increase the distance between the side of the connection bar 303 away from the battery cell 20 and the battery cell 20. The bus bar 302 is disposed between the battery cell 20 and the side of the connection bar 303 away from the battery cell 20. A schematic diagram of the electrical connection between the positive conductive component and the positive electrode of the battery cell 20 is shown in FIG. 22, with a connecting portion 3032 attached to the positive electrode of the battery cell 20. A schematic diagram of the electrical connection between the negative conductive component and the negative electrode of the battery cell 20 is shown in FIG. 23, with a connecting portion 3032 attached to the negative electrode of the battery cell 20.

It can be understood that the battery module needs to be configured with many wiring harnesses to collect and send the relevant information about the battery module's operation to the battery management system, for example, the wire harness 30 for collecting the voltage information of the battery cell 20. The wire harness 30 is arranged above the connecting portion 3032 and is electrically connected to the connecting portion 3032. In the axial direction of the battery cell 20, although the bending portion 3033 increases the height of the connection bar 303, the increased height thereof may be set within the height of the wire harness 30, so that the distance between the connection bar 303 and the top surface of the battery cell is no greater than the distance between the wire harness 30 and the top surface of the battery cell 20 to make the increased height of the connection bar 303 utilize the height of the wire harness 30 and thus will not affect the height of the battery module.

Based on this, by arranging the bending portion 3033 on the connection bar 303, the bus bar 302 may be inserted between the connection bar 303 and the battery cell, so that the bus bar 302 may be disposed closer to the battery cell 20, and thus the size of the bus structure may be reduced in the radial direction of the battery cell 20, as shown in FIGS. 22 and 23. Therefore, the width size of the battery module using such bus structure can be controlled, which is beneficial to the smooth progress of battery miniaturization.

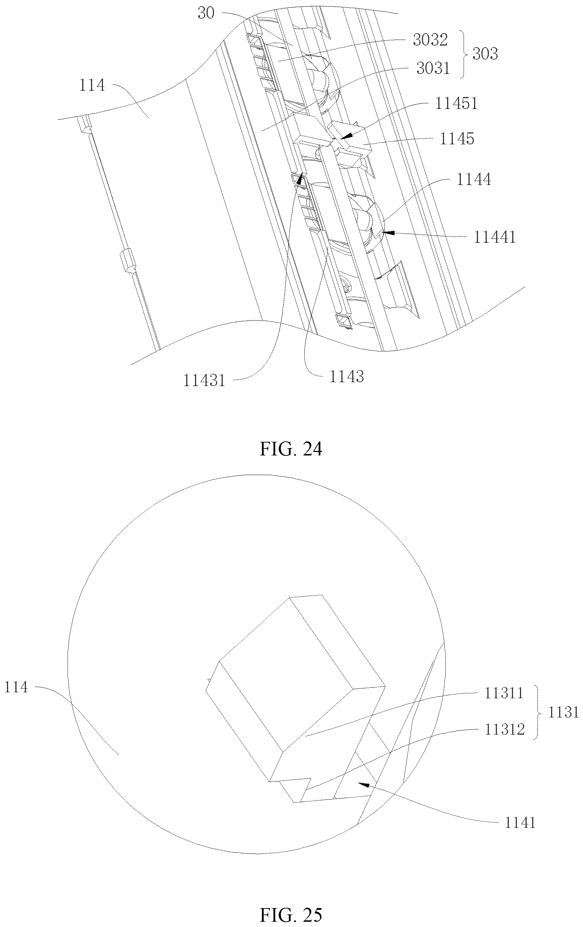

It can be understood that the first clamping slot 11431 is used to arrange the connecting portion 3032 that is electrically connected to the positive pole of the battery cell 20, and the second clamping slot 11441 is used to arrange the connecting portion 3032 that is electrically connected to the negative electrode of the battery cell 20. As such, the wiring groove 117 is formed between the first baffle 1143 and the second baffle 1144. Specifically, the first baffle 1143 and the bent portion 3033 on the connecting bar 303 that is electrically connected to the positive electrode of the battery cell 20 form one groove wall of the wiring groove 117, and the second baffle 1144 and the bent portion 3033 on the connecting bar 303 that is electrically connected to the negative electrode of the battery cell 20 forms the other groove wall of the wiring groove 117. The portion of the bracket body between the first baffle 1143 and the second baffle 1144 and the connecting portion 3032 connected to the positive and negative electrodes of the battery cell 20 form the groove bottom of the wiring groove 117, as shown in FIG. 25. FIG. 25 is a partial enlarged view of FIG. 3. The wiring harness 30 for collecting the voltage information of the battery cell 20 and the like is arranged in the wiring groove 117. When filling the glue, the glue is filled into the wiring groove 117. The glue flows in the wiring groove 117 and flows into the communication groove 1132 through the glue filling hole 1142.

Please refer to FIG. 24, which is a partial enlarged view of FIG. 3. In one embodiment, a fuse structure 3035 is provided at one end of the connecting portion 3032 close to the main body portion 3031.

Exemplarily, the fuse structure 3035 is disposed on the connecting portion 3032 connected to the positive electrode of the battery cell 20. Furthermore, the fuse structure 3035 is provided on a weak part of the connecting portion 3032. The weak part is formed by providing a plurality of hollow holes on the connecting portion 3032. A first opening 3021 is provided on the side of the bus bar 302 close to the connecting portion 3032. Along the axial direction of the battery cell, the first opening 3021 is disposed opposite to the fuse structure 3035, thereby preventing the fuse structure 3035 from contacting the bus bar 302, and in turn preventing the bus bar 302 from dissipating heat to the fuse structure 3035 to make the fuse structure 3035 function the insurance effect normally.

In the present embodiment, when the battery module is short-circuited or overloaded, the temperature in the circuit will be too high, which will cause the fuse structure 3035 to fuse due to the concentration of thermal stress, thereby reducing the risk of thermal runaway within the battery module, and effectively improving the safety of the battery module.

Please refer to FIG. 1 and FIG. 25. FIG. 25 is an enlarged view of E in FIG. 1. In one embodiment, the bracket body includes a first bracket 113 and a second bracket 114. The accommodation cavity 108, the first through hole 110 and the first mounting portion 109 are provided on the first bracket 113. The wiring groove 117, the glue filling hole 1142, the positive communication hole 115, the negative communication hole 116, the plugging hole 112, the chute 102 and the mounting table 104 are provided on the second bracket 114. The second bracket 114 covers one side of the first bracket 113 to close the port of the accommodation cavity 108 close to the second bracket 114. The second bracket 114 is provided with a mounting through hole 1141. The first bracket 113 is provided with a limiting block 1131. The limiting block 1131 passes through the mounting through hole 1141 and then block-fits with the second bracket 114.

The plugging shaft 704 is disposed at one end of the mounting bracket 70 along the axial direction of the accommodating cavity 108 and is disposed adjacent to the second bracket 114. It can be understood that in the radial direction of the mounting through hole 1141, at least part of the size of the limiting block 1131 is larger than the shape and size of the cross section of the mounting through hole 1141, so as to achieve block-fitting between the limiting block 1131 and the second bracket 114. Meanwhile, the limiting block 1131 has elastic deformation, such that the limiting block 1131 can be squeezed to make the size of the limiting block 1131 not larger than the size of the mounting through hole 1141, and in turn make the limiting block 1131 pass through the mounting through hole 1141.

Exemplarily, the limiting block 1131 includes a wedge block 11311 and a connecting block 11312. The wedge-shaped block 11311 has an inclined surface, in which one end of the inclined surface is connected to the large end surface, and one end of the large end surface is connected to the connecting block 11312. The other end of the inclined plane is the tip of the wedge block 11311, and the tip is disposed away from the second bracket 114. The connecting block 11312 has a transition fit or clearance fit with the mounting through hole 1141. The tip guides the wedge block 11311 to pass through the mounting through hole 1141 until the large end surface is located on the side of the first bracket 113 away from the second bracket 114.

Exemplarily, one end of the first mounting portion 109 towards the first bracket 113 is connected to the outside. As shown in FIG. 11, the first bracket 113 is provided with a second mounting slot 1133, and one end of the second bracket 114 close to the first bracket 113 is inserted into the second mounting slot 1133, so that one end of the second bracket 114 is enclosed therein by the first bracket 113, which can then protect the battery cell installed on the second bracket 114. When assembling the battery, the second bracket 114, the bus structure, the wiring harness 30, the connector, etc. may be integrated into a whole firstly, and then used for assembling the battery. As a result, the integrated incoming materials for the components such as bus structures can be realized, thereby simplifying the process and improving production efficiency.

Furthermore, the thread hanging hook 1147 is provided on the groove wall of the second mounting groove 1133.

In the present embodiment, by using the first bracket 113 and the second bracket 114 as the bracket body, it is not only convenient to install the battery cell 20 in the accommodating cavity 108, but also it is possible to close the port of the accommodating cavity 108 by the first bracket 113, so that the battery cell 20 is limited inside the accommodation cavity 108, which is beneficial to improve the convenience of battery assembly.

While the present disclosure has been described in connection with what is considered the most practical and preferred embodiments, it is understood that the present disclosure is not limited to the disclosed embodiments but is intended to cover various arrangements made without departing from the scope of the broadest interpretation of the appended claims.

## Claims

1. A battery cell bracket (10), **characterized by** comprising a bracket body having an accommodation cavity (108) configured to install the battery cell (20); a wiring groove (117) is provided on an outer surface of the bracket body along one end of the battery cell (20) in an axial direction, and a communication hole is provided at a bottom of the wiring groove (117) to communicate with the accommodation cavity (108).

2. The battery cell bracket (10) according to claim 1, **characterized in that** a third baffle (1145) is provided on a side of an opening of the wiring groove (117) away from the bracket body, both ends of the third baffle (1145) are connected to the bracket body in a width direction of the wiring groove (117), or
a first baffle (1143) and a second baffle (1144) are protruded from the outer surface of the bracket body, the first baffle (1143) and the second baffle (1144) are spaced apart in a width direction of the wiring groove (117), and a gap between the first baffle (1143) and the second baffle (1144) is the wiring groove (117).

3. The battery cell bracket (10) according to claim 2, **characterized in that** a wire slot (11451) is provided on a side of the third baffle (1145) away from the bracket body and the wire slot (11451) is configured to separate the third baffle (1145) into two independent parts in a width direction of the wiring groove (117).

4. The battery cell bracket (10) according to claim 3, **characterized in that**, an extension direction of the wiring groove (117) intersects with an extension direction of the wire slot (11451) in an orthographic projection of the wiring groove (117) in a bottom.

5. The battery cell bracket (10) according to claim 2, **characterized in that** a fourth baffle (1146) is provided in the wiring groove (117), and the fourth baffle (1146) is perpendicular to the extension direction of the wiring groove (117) and is disposed opposite to the third baffle (1145); a first through slot (11461) is provided on a side of the fourth baffle (1146) close to the third baffle (1145), and an extension direction of the first through slot (11461) is parallel to the extension direction of the wiring groove (117).

6. The battery cell bracket (10) according to claim 2, **characterized in that** the first baffle (1143) is provided with a first clamping slot, and the second baffle (1144) is provided with a second clamping slot.

7. A battery module, **characterized by** comprising:
the cell bracket (10) according to any one of claims 1-6; and
a battery cell (20) disposed in the accommodation cavity (108), and an electrode of the battery cell (20) is located in the communication hole.

8. A battery, **characterized by** comprising:
the battery module according to claim 7;
a conductive component, provided on the outer surface of the bracket body and electrically connected to the battery cell (20); and
a fastening component, provided on the bracket body and configured to fasten the conductive component to the bracket body.

9. The battery according to claim 8, **characterized in that** the bracket body has a first surface (101), the first surface (101) is provided with a chute (102), and the chute (102) has an opening width smaller than a bottom width of the chute (102), and the chute (102) is provided with a first slot port (1023) that communicates with an outside at an end; the conductive component is located above the opening of the chute (102); the fastening component comprises a bolt (40) and a nut (50), the nut (50) is located in the chute (102) and is block-fitted with the chute (102) along an axis direction of the nut (50); a screw rod of the bolt (40) passes through the conductive component and is connected to the nut (50).

10. The battery according to claim 9, **characterized in that** the first surface (101) is further provided with a deformation groove (103), the deformation groove (103) is at least located at a side of the chute (102) in a width direction, and is spaced apart from the chute (102), or
a groove wall of the chute (102) is provided with a first snap-fitting structure, and an outer peripheral surface of the nut (50) is provided with a second snap-fitting structure (502), the first snap-fitting structure is snap fitted with the second snap-fitting structure.

11. The battery according to claim 8, **characterized in that** the battery further comprises a temperature sensor (60), and a first mounting portion (109) is provided on the bracket body; the first mounting portion (109) communicates the accommodation cavity (108) with the outside along a radial direction of the battery cell (20); a mounting bracket (70) is provided in the first mounting portion (109); the temperature sensor (60) is disposed on the mounting bracket (70) and is attached to an outer peripheral surface of the battery cell (20).

12. The battery according to claim 11, **characterized in that** there is a plurality of the accommodation cavities (108), there are a plurality of the battery cells (20), and the plurality of battery cells (20) and the plurality of battery cells (20) are disposed in one-to-one correspondence; the first mounting portion (109) is located between two adjacent battery cells (20), and the temperature sensor (60) collects a temperature of the two adjacent battery cells (20).

13. The battery according to any one of claims 8-12, **characterized in that** a first through hole (110) is opened on a side of the accommodation cavity (108) away from the wiring groove (117), and the accommodation cavity (108) is connected to the outside through the first through hole (110), and a first plugging structure (111) is provided on an outer wall of the bracket body; the battery further comprises a blocking cover (80), and the blocking cover (80) is provided on the outer wall of the bracket body and closes the first through hole (110); the blocking cover (80) is provided with a second plugging structure (801) on a side facing the bracket body, the second plugging structure (801) is plugged to the first plugging structure (111) along a circumference of the first through hole (110), or
the conductive component comprises a bridging bar (301) and a bus structure; the bus structure comprises a connection bar (303) electrically connected to the battery cell (20) and a bus bar (302) electrically connected to the connection bar (303), one end of the connection bar (303) is located in the wiring groove (117), and the other end is located outside the wiring groove (117) and is electrically connected to the bus bar (302); the bus bar (302) is provided on the bracket body and is electrically connected to the bridging bar (301), the fastening component fasten an electrical connection portion (3032) between the bridging bar (301) and the bus bar (302) on the bracket body.

14. The battery according to claim 13, **characterized in that** a first adsorption member (901) configured to adsorb a glue (90) is provided between the blocking cover (80) and the bracket body, the first adsorption member (901) is an annular structure extending along a circumference of the first through hole (110), both sides of the first adsorption part (901) are respectively connected with the bracket body and the blocking cover (80).

15. The battery according to claim 13, **characterized in that** the connection bar (303) has a bending portion (3033), and the bending portion (3033) is configured to increase a distance between a side of the connection bar (303) away from and the battery cell (20); the bus bar (302) is disposed between the battery cell (20) and a side of the connection bar (303) away from the battery cell (20) and overlaps with the connection bar (303).
